# EUROPÄISCHE PATENTSCHRIFT

(11) **EP 2 545 763 B1**
(45) Veröffentlichungstag und Bekanntmachung des Hinweises auf die Patenterteilung: **17.12.2014**
(21) Anmeldenummer: 12173397.6
(22) Anmeldetag: 25.06.2012
(51) Int. Cl.: A01D 90/12

(54) **Ladewagen**
Loader wagon
Chariot de chargement

(30) Priorität: 11.07.2011 NL 1038938
(43) Veröffentlichungstag der Anmeldung: 16.01.2013
(73) Patentinhaber: Forage Innovations B.V., 3147 PB Maassluis (NL)
(72) Erfinder: Dreier, Thomas, 89367 Waldstetten (DE)
(74) Vertreter: Postma, Robert Erwin

(56) Entgegenhaltungen:
- EP-A2- 2 275 287
- DE-A1- 10 154 733
- DE-A1-102005 055 408
- DE-U1-202007 004 540

## Beschreibung

Die Erfindung betrifft einen Ladewagen, dessen Laderaum an der Vorderseite von einer schwenkbaren Stirnwand begrenzt ist, die insbesondere über einem Förderkanal angeordnet ist. Unter dem Begriff "Ladewagen" sollen auch sog. Kombiwagen verstanden werden, die im Häckselbetrieb von einem Feld- oder Maishäcksler beladen werden.

Das vom Ladewagen aufgenommene Futter, wie Gras, Silage oder Heu, wird meist von einer Pick-up einem Förderrotor zugeführt, der das Erntegut, ggf. unter Schneiden mittels eines Schneidwerks, in einen nachgeordneten Laderaum presst. Dort wird das Futter mit einem Kratzboden stufenweise nach hinten transportiert, so dass der Förderrotor wieder Erntegut nachpressen kann.

Der Laderaum eines Ladewagens wird vorne von einer Stirnwand und seitlich von Seitenwänden begrenzt. Verschiedene Lagewagen mit schwenkbaren Stirnwänden sind bekannt geworden.

Die Stirnwand 14 des Ladewagens aus DE 20014129 U1 lässt sich um einen horizontalen Querholm 9 verschwenken. Beim Beladen des Laderaums befindet die Stirnwand 14 sich zunächst in der Grundstellung A. Das zugeführte Futter steigt an der Seitenwand 14 an. Eine Verstelleinrichtung mit Hydraulikzylindern 20 und Kolbenstangen 21 greift am oberen Ende der Seitenwand 14 an und verschwenkt die Seitenwand 14 nach hinten in eine Stellung B. Durch das Verschwenken wird das Futter im Laderaum nach hinten geschoben.

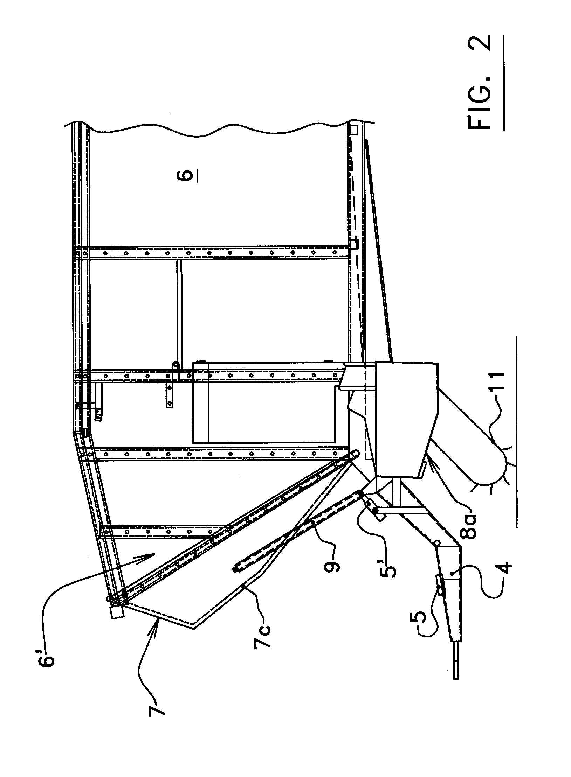

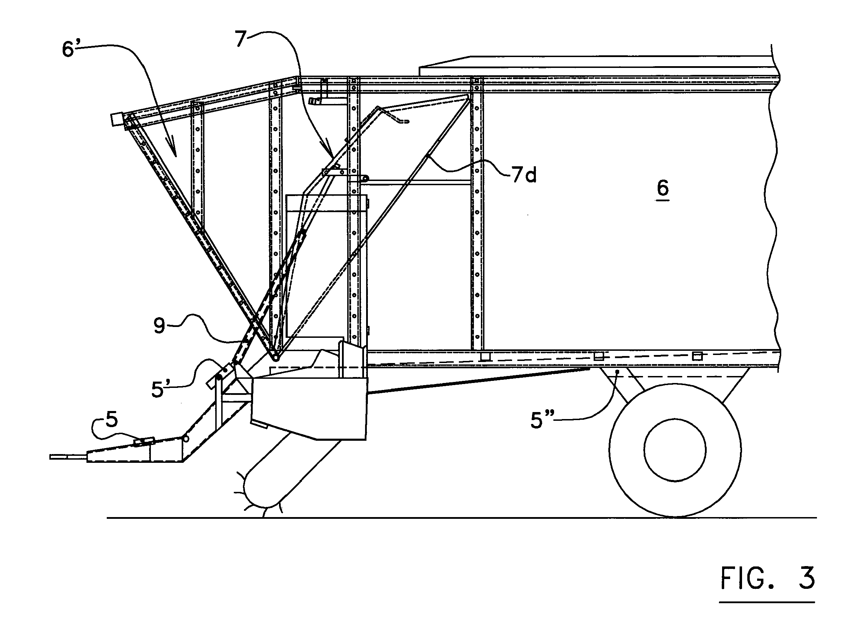

In DE 102005055408 A1 wird ein Ladewagen 1 mit einer vorderen Stirnwand 8 an einem vorderen Aufbau 10 sowie mit Seitenwänden 7 beschrieben. Die vordere Stirnwand 8 lässt sich aufklappen, um eine Beladeöffnung 14 freizugeben, vgl. Fig. 2, und wieder zuklappen, vgl. Fig. 3. Ein Hydraulikzylinder 13 vermag die Stirnwand 8 zu verschwenken. Eine Tastwand 11 ist an ihrem vorderen Ende gelenkig mit der Stirnwand 8 verbunden und an ihrem hinteren Ende über zwei Gelenke 12 mit den beiden Seitenwänden 7. Die Stirnwand 8, die Tastwand 11 und das Gestänge 12 bilden zusammen ein Viergelenk. Die Tastwand 11 lässt sich auch in das Innere des Laderaums abklappen.

Der Ladewagen aus DE 202007004540 U1 nimmt Erntegut mittels eines Aufnehmers 35 auf und fördert dieses aufgenommene Erntegut mittels eines Rotors 20 durch einen Presskanal 8 hindurch in den Laderaum 30. Dieser Laderaum 30 wird vorne von einer Stirnwand 10 begrenzt und seitlich von Seitenwänden 31. Ein oberer Querholm 29 verbindet die beiden Seitenwände 31 miteinander. Ein Kratzboden 28 transportiert Futter nach hinten ab. Die Stirnwand 10 lässt sich um eine horizontale Achse 12 verschwenken. Während der Ladewagen beladen wird, ist die Seitenwand 10 zunächst in einer Lage A, in der sie schräg nach vorne zum ziehenden Traktor hin ansteigt, so dass sich der obere Teil der Seitenwand 10 über und vor dem Rotor 20 befindet. Mehrere Messfühler 28 am oberen Querholm 29 detektieren, wann zugeführtes Futter den Querholm 29 erreicht. Dies löst den Schritt aus, die Seitenwand 10 um die Achse 12 in eine Lage B zu verschwenken, in welcher die Seitenwand 10 schräg nach hinten ansteigt. Durch das Verschwenken verschiebt die Seitenwand 10 Futter nach hinten. Sobald die Messfühler 28 den Kontakt zum Futter wieder verloren haben, wird die Seitenwand 10 wieder in die Lage A verschwenkt.

Eine ähnliche Konstruktion eines Ladewagens aus dem Jahre 2006 (Einsatzort: Oberpfalz) ist im Internet unter www.aarartechnik-imeinsatz.de zu finden.

Sowohl beim Ladewagen aus DE 202007004540 U1 als auch beim Ladewagen aus der Oberpfalz lässt sich die Stirnwand um etwa 15° nach vorne neigen. Der Gewinn an Laderaum beträgt nur etwa 5 %. Zudem lässt sich diese Erweiterung nicht immer nutzen, da gerade bei schwerem Futter, wie regennassem Gras, die Stützlast überschritten werden könnte und/oder das Fahrverhalten des Gespanns aus Traktor und Ladewagen negativ beeinflusst wird.

Verschiedene Ansätze sind bekannt geworden, um das Gewicht von Erntegut in einem landwirtschaftlichen Fahrzeug zu messen.

In DE 10154733 A1 wird ein einachsiger Anhänger mit einem Vorratsbehälter 4 beschrieben. Der Vorratsbehälter 4 stützt sich mittels zweier Abstützelemente 6 auf dem Fahrwerk mit den Laufrädern 7 ab. Um das Gewicht der Ladung zu messen, sind in den Abstützelementen 6 zwei Wegezellen 9 und in der Zugdeichsel 2 eine weitere Wiegezelle 10 angeordnet.

Der Rahmen 10 des Ladewagens 1 aus EP 2275287 A2 stützt sich mittels mehrerer Hydraulikzylinder 11 auf zwei Fahrwerksachsen 7, 8 ab. Jeweils ein Druckmesser 12 pro Hydraulikzylinder 11 misst den Hydraulikdruck in diesem Hydraulikzylinder 11. Vorzugsweise ist der Druckmesser 12 an einer Druckleitung zum Hydraulikzylinder 11 angebaut. Die Knickdeichsel 4 vorne am Ladewagen 1 lässt sich mittels zweier weiterer Hydraulikzylinder 13 um eine horizontale Achse 14 verstellen, vgl. Fig. 3. Ein Druckmesser 15 misst den Stützdruck, den die Horizontalzylinder 13 ausüben. Eine Auswerteeinheit 16 erhält Signale von den Druckmessern 12, 15 und ermittelt die Stützkräfte und hieraus das Gewicht des Ladewagens 1.

Der Erfindung liegt daher die Aufgabe zugrunde, einen Ladewagen zu schaffen, der ein erhöhtes Ladevolumen bei Wahrung der Fahrsicherheit bietet.

Diese Aufgabe wird mit den Merkmalen des Anspruchs 1 gelost.

Erfindungsgemäß wird vorgeschlagen, dass die Stirnwand mehr als 20° nach vorne zu neigen ist, wobei der maximale Ausschwenkwinkel über einen Stützlastsensor, insbesondere in oder an der Deichsel des Ladewagens steuerbar ist. Dadurch kann insbesondere bei leichtem, trockenem Erntegut (wie Heu) ein Ausschwenkwinkel von z. B. 60° (oder mehr) erzielt werden, so dass ein Laderaumgewinn von rund 15% erreichbar ist, ohne die Fahrsicherheit zu gefährden. Der Ausschwenkwinkel kann somit optimal an das Erntegut und/oder die Tragfähigkeit des Traktor-Ladewagen-Gespanns angepasst werden. Zum Entladen wird die Stirnwand bevorzugt mit Hydraulikzylindern zum Laderaum hin verschwenkt, um das Futter zum Kratzboden hin zu fördern.

Bevorzugte Ausführungsformen sind Gegenstand der Unteransprüche. Die Erfindung wird nachfolgend an Ausführungsbeispielen im Zusammenhang mit den Zeichnungen erläutert. Hierbei zeigen:
- Fig. 1: einen Ladewagen in Seitenansicht;
- Fig. 2: eine abgewandelte Ausführungsform des Ladewagens; und
- Fig. 3: die Ausführung nach Fig. 2 mit zurückgeklappter Stirnwand.

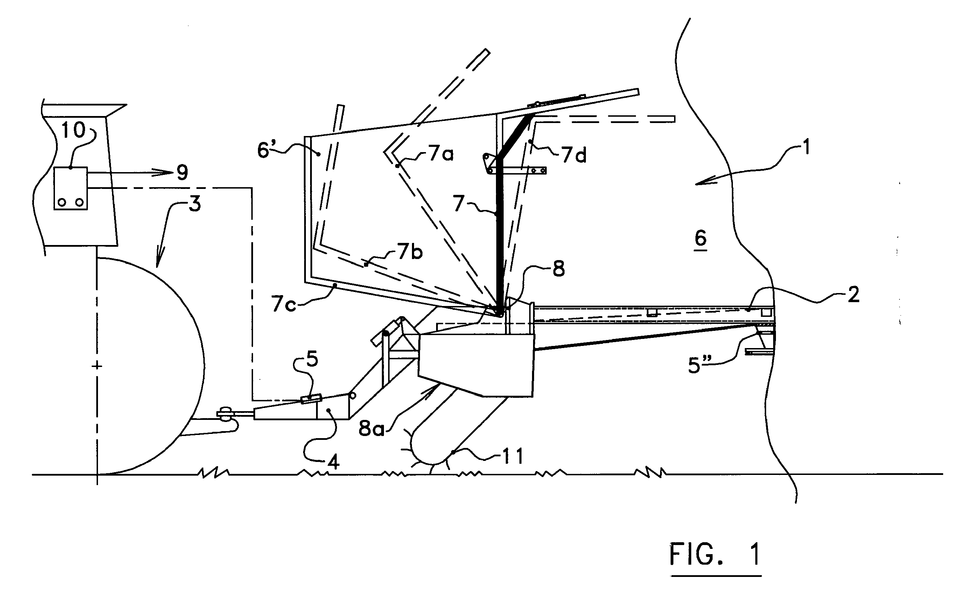

In Fig. 1 ist der vordere Bereich eines Ladewagens 1 gezeigt, der einen Rahmen 2 aufweist, über dem sich ein Laderaum erstreckt. Der Ladewagen 1 ist über eine Deichsel 4 mit einem schematisch dargestellten Traktor 3 gekoppelt. An oder in der Deichsel 4 ist ein Stützlastsensor 5 vorgesehen, der bevorzugt per Signalkabel oder auch drahtlos mit einem Steuergerät 10 in der Kabine des Traktors 3 verbunden ist. Derartige Sensoren in Form von Dehnmessstreifen oder Wägezellen sind beispielsweise in der DE 10 2004 029 295 beschrieben und werden auch die Messung des Ernteertrags eingesetzt. Der Stützlastsensor 5 kann auch an oder in einem Knickzylinder der Deichsel 4 angeordnet sein, wie dies in Fig. 2 mit dem Bezugszeichen 5' angedeutet ist und ist insbesondere als Drucksensor ausgebildet, um die Gewichtsbelastung des Ladewagens 1 durch die aufgenommene Futtermenge zu erfassen. Dabei können auch am Fahrgestell auch Wägesensoren oder sog. Magnetostriktion-Sensoren zur Erfassung der Achslast vorgesehen sein, wie dies in Fig. 1 und 3 mit dem Bezugszeichen 5" angedeutet ist.

Der Laderaum des Ladewagens 1 wird seitlich von Seitenwänden 6 umgrenzt, die vom Rahmen 2 ausgehen, sowie (neben einer nicht dargestellten Rückwand) von einer Stirnwand 7. Diese ist an einer horizontalen Achse etwa auf der Höhe des Endes eines Förderkanals 8 in mehrere Stellungen 7a bis 7d verschwenkbar, wie nachfolgend näher beschrieben wird. Das Erntegut wird von einer Pick-up 11 aufgenommen und zu einem Förderrotor 8a übergeleitet, der das Futter durch den Förderkanal 8 in den Laderaum des Ladewagens transportiert und hierbei ggf. in bekannter Art noch schneidet.

In der mit durchgezogenen Linien dargestellten Position der Stirnwand 7 befindet sich diese in der üblichen Ladestellung, die allgemein vertikal oder aufrechtstehend ist. Mit zunehmender Füllung des Laderaums kann die Stirnwand 7 unter Betätigung wenigstens eines Hydraulikzylinders 9 (vgl. Fig. 2 und 3) oder einer ähnlichen Betätigungsvorrichtung (Aktuator) zum Traktor 3 hin verschwenkt werden, um die Position 7a einzunehmen, so dass sich eine Vergrößerung des Laderaums von z. B. 2 m³ ergibt. Die Stirnwand kann auch noch weiter bis in die Position 7b oder gar 7c abgesenkt werden, sofern dies die vom Stützlastsensor 5 gemessene Stützlast erlaubt. Dort ergibt sich durch diese Verschwenkung von hier etwa 60 bis 80° relativ zur vertikalen Grundposition eine Laderaumvergrößerung von z. B. 6 m³.

Die Stirnwand 7 kann aus ihrer Normalstellung auch etwas nach hinten in die Position 7d geklappt werden, um beim Entladen das Erntegut besser über den am Rahmen 2 verlaufenden Kratzboden zu schieben, so dass Futterreste über dem Förderkanal minimiert werden. Bei den nach vorne geschwenkten Positionen 7a, 7b und 7c kann mit der Schwenkbewegung der Stirnwand 7 eine Verlängerung 6' der Seitenwand 6 mit nach vorne gezogen werden, damit keine Lücke in der Umgrenzung des Laderaums entsteht. Die Verlängerung 6' kann z. B. als Scherengitter ausgebildet sein, oder feststehend sein, wie in Fig. 2 und 3 gezeigt ist. Als obere Abdeckung der Laderaumvergrößerung genügen meist einfache, ausziehbare Kunststoffseile.

Die Verstellung der Stirnwand 7 (in die Positionen 7a bis 7d) über den wenigstens einen Hydraulikzylinder 9 wird über das Steuergerät 10 und vorzugsweise elektro-hydraulische Schaltventile gesteuert. Der Hydraulikzylinder 9 ist bevorzugt am Anlenkbereich der Deichsel 4 abgestützt und so in stabiler Weise gelagert, um auch große Lasten (in der Position 7c bzw. 7b) bewegen zu können, also das in der Laderaumvergrößerung aufliegende Erntegut zum Kratzboden hin zu transportieren.

In Fig. 2 und 3 ist die Stirnwand 7 muldenartig ausgeführt und befindet sich in Fig. 2 in der Maximalposition (entsprechend 7c in Fig. 1). Hierbei ist der Hydraulikzylinder 9 in seiner kürzesten Stellung, während in Fig. 3 die Kolbenstange maximal ausgefahren ist, um die Entladeposition (entsprechend 7d in Fig. 1) einzunehmen. In Fig. 3 ist auch die Verlängerung 6' der Seitenwand 6 ersichtlich, wobei für analoge Bauteile die gleichen Bezugszeichen wie in Fig. 1 verwendet werden. Bei dieser muldenartigen Ausführung der Stirnwand 7 ragt der mittlere Bereich der Stirnwand 7 über die vorderen Kanten der Seitenwände 6 hinaus, um so zusätzliche Laderaum zu gewinnen.

Wesentlich ist hierbei die Steuerung oder Kontrolle der Schwenkposition der Stirnwand 7 unter Berücksichtigung der Stützlast. Wird leichtes, trockenes Erntegut aufgenommen, kann die maximale Laderaumvergrößerung (Position 7c) realisiert werden. Hierbei hat der Fahrer des Traktors 3 jedoch noch Einflussmöglichkeiten, indem er am Steuergerät 10 einen kleineren Sollwert einstellt, wenn z. B. die Fahrt über schlechte Straßen führt. Andererseits kann er den Sollwert am Steuergerät 10 auch erhöhen, wenn z. B. an der Fronthydraulik ein Ausgleichsgewicht angebaut wird, was sich auf die maximal zulässige Stützlast bzw. das Fahrverhalten auswirkt, und/oder die Fahrt über gut ausgebaute Straßen führt.

Dementsprechend steuert das Steuergerät 10 den oder die Hydraulikzylinder 9, so dass bei feuchtem, schweren Futter dann z. B. eine Position zwischen 7a und 7b maximal zulässig ist, also die (weitere) Verkürzung des Hydraulikzylinders 9 steuerungstechnisch eingeschränkt wird, basierend auf den Messsignalen vom Stützlastsensor 5. Die Position 7b oder 7c der Stirnwand 7 eignet sich auch zur Beladung über einen Feldhäcksler, so dass dort von oben das Futter eingeblasen werden kann.

## Patentansprüche

1. Ladewagen, dessen Laderaum an der Vorderseite von einer schwenkbaren Stirnwand (7) begrenzt ist, die insbesondere über einem Förderkanal (8) angeordnet ist, **dadurch gekennzeichnet, dass** die Stirnwand (7) relativ zur Vertikalen um mehr als 20° nach vorne zumindest in eine Position (7a) oder weiter (7b, 7c) schwenkbar ist, wobei der Ausschwenkwinkel über einen Stützlastsensor (5) steuerbar ist.

2. Ladewagen nach Anspruch 1, **dadurch gekennzeichnet, dass** der Stützlastsensor (5) an oder in einer Deichsel (4) angeordnet ist, insbesondere als Drucksensor in einem Knickzylinder (5') und/oder Fahrgestell (5") ausgebildet ist.

3. Ladewagen nach Anspruch 1 oder 2, **dadurch gekennzeichnet, dass** der Stützlastsensor (5) mit einem Steuergerät (10) in einer Kabine eines Traktors (3) gekoppelt ist.

4. Ladewagen nach einem der Ansprüche 1 bis 3, **dadurch gekennzeichnet, dass** die Stirnwand (7) muldenartig ausgeformt ist, wobei der mittlere Bereich weiter nach vorne ragt als die Seitenwände (6).

5. Ladewagen nach Anspruch 3 oder 4, **dadurch gekennzeichnet, dass** das Steuergerät (10) mit wenigstens einem Hydraulikzylinder (9) gekoppelt ist.

6. Ladewagen nach einem der Ansprüche 1 bis 5, **dadurch gekennzeichnet, dass** die Seitenwände (6) des Laderaums Verlängerungen (6') aufweisen.

7. Ladewagen nach einem der Ansprüche 3 bis 6, **dadurch gekennzeichnet, dass** der Grenzwert des Ausschwenkwinkels der Stirnwand (7) am Steuergerät (10) manuell veränderbar ist.

8. Ladewagen nach einem der Ansprüche 1 bis 7, **dadurch gekennzeichnet, dass** die Stirnwand (7) zum Entladen relativ zur Vertikalen auch nach rückwärts schwenkbar ist.

9. Ladewagen nach einem der Ansprüche 1 bis 8, **dadurch gekennzeichnet, dass** die Stirnwand (7) über einen Winkel (7 → 7b) von etwa 30 bis 60° schwenkbar ist, insbesondere über einen Maximalwinkel (7d → 7c) von etwa 90°.

10. Ladewagen nach einem der Ansprüche 1 bis 9, **dadurch gekennzeichnet, dass** die Stirnwand (7) um eine Horizontalachse über dem Förderrotor (8a) verschwenkbar ist.

## Claims

1. Loader wagon, the loading space of which is limited on the front side by a pivotal front wall (7) which is arranged, in particular, above a conveyor duct (8), **characterized in that** the front wall (7) is forwardly pivotal relative to the vertical by more than 20°, at least into a position (7a) or further (7b, 7c), wherein the pivoting-out angle is controllable by means of a vertical load sensor (5).

2. Loader wagon according to Claim 1, **characterized in that** the vertical load sensor (5) is arranged on or in a drawbar (4), in particular is embodied as a pressure sensor in a bending cylinder (5') and/or chassis (5").

3. Loader wagon according to Claim 1 or 2, **characterized in that** the vertical load sensor (5) is coupled to a control device (10) in a cab of a tractor (3).

4. Loader wagon according to one of Claims 1 to 3, **characterized in that** the front wall (7) is shaped in a trough-like fashion, wherein the central region projects further forward than the side walls (6).

5. Loader wagon according to Claim 3 or 4, **characterized in that** the control device (10) is coupled to at least one hydraulic cylinder (9).

6. Loader wagon according to one of Claims 1 to 5, **characterized in that** the side walls (6) of the loading space have extensions (6').

7. Loader wagon according to one of Claims 3 to 6, **characterized in that** the threshold value of the pivoting-out angle of the front wall (7) is manually changeable on the control device (10).

8. Loader wagon according to one of Claims 1 to 7, **characterized in that** the front wall (7) is rearwardly pivotal relative to the vertical for the purpose of discharging.

9. Loader wagon according to one of Claims 1 to 8, **characterized in that** the end wall (7) is pivotal over an angle (7→7b) ranging from approximately 30° to 60°, in particular over a maximum angle (7d→7c) of approximately 90°.

10. Loader wagon according to one of Claims 1 to 9, **characterized in that** the front wall (7) is pivotal about a horizontal axis by means of the rotor feed (8a).

## Revendications

1. Remorque auto-chargeuse, dont l'espace de chargement est limité au front par une paroi frontale pivotante (7) qui est disposée en particulier au-dessus d'un conduit d'alimentation (8), **caractérisée en ce que** la paroi frontale (7) est pivotante par rapport à la verticale de plus de 20° vers l'avant au moins dans une position (7a) ou davantage (7b, 7c), l'angle de pivotement étant contrôlable par le biais d'un capteur de charge d'appui verticale (5).

2. Remorque auto-chargeuse selon la revendication 1, **caractérisée en ce que** le capteur de charge d'appui verticale (5) est disposé sur ou dans un timon (4), en particulier en tant que capteur de pression dans un cylindre articulé (5') et/ou dans un châssis (5").

3. Remorque auto-chargeuse selon la revendication 1 ou 2, **caractérisée en ce que** le capteur de charge d'appui verticale (5) est accouplé à un appareil de contrôle (10) dans une cabine d'un tracteur (3).

4. Remorque auto-chargeuse selon l'une quelconque des revendications 1 à 3, **caractérisée en ce que** la paroi frontale (7) est formée en forme de bac, la région médiane faisant plus saillie vers l'avant que les parois latérales (6).

5. Remorque auto-chargeuse selon la revendication 3 ou 4, **caractérisée en ce que** l'appareil de contrôle (10) est accouplé à au moins un cylindre hydraulique (9).

6. Remorque auto-chargeuse selon l'une quelconque des revendications 1 à 5, **caractérisée en ce que** les parois latérales (6) de l'espace de chargement comprennent des prolongements (6').

7. Remorque auto-chargeuse selon l'une quelconque des revendications 3 à 6, **caractérisée en ce que** la valeur limite de l'angle de pivotement de la paroi frontale (7) est modifiable manuellement au niveau de l'appareil de commande (10).

8. Remorque auto-chargeuse selon l'une quelconque des revendications 1 à 7, **caractérisée en ce que** la paroi frontale (7) est pivotante par rapport à la verticale également vers l'arrière pour le déchargement.

9. Remorque auto-chargeuse selon l'une quelconque des revendications 1 à 8, **caractérisée en ce que** la paroi frontale (7) est pivotante sur un angle (7 → 7b) d'approximativement 30 à 60°, en particulier sur un angle maximal (7d → 7c) d'approximativement 90°.

10. Remorque auto-chargeuse selon l'une quelconque des revendications 1 à 9, **caractérisée en ce que** la paroi frontale (7) est pivotante autour d'un axe horizontal au moyen du rotor d'alimentation (8a).
